# DEMANDE DE BREVET EUROPEEN

(11) **EP 1 187 393 A2**
(43) Date de publication de la demande: **13.03.2002**
(21) Numéro de dépôt: 01460051.4
(22) Date de dépôt: 05.09.2001
(51) Int. Cl.: H04L 12/14, G07F 7/10, H04L 29/06

(54) **Procédé et système de paiement d'opérations de transmission et/ou de services effectuées au sein d'un réseau de transmission de données par paquets**

(30) Priorité: 07.09.2000 FR 0011438
(71) Demandeur: Cegetel Groupe, 92915 Paris La Défense (FR)
(72) Inventeur: Bouthors, M. Nicolas, 35240 Meylan (FR)
(74) Mandataire: Vidon, Patrice

(57) **Abrégé**

L'invention concerne le paiement d'opérations de transmission et/ou de service effectuées au sein d'un réseau (4) de transmission de données par paquets (perfectionnement à la technique des jetons de paiement). Selon l'invention, entre l'équipement source (S) et l'équipement destination (D), au moins un noeud est utilisé comme noeud de cache (NC) et se comporte également comme un noeud de débit. Il comprend une passerelle de débit (PD) modifiant le jeton de paiement affecté à chaque paquet de données reçu, de façon à diminuer la valeur initiale du jeton de paiement, d'un montant représentatif du coût de la au moins une opération de cache effectuée, pour le paquet reçu, par le noeud de cache. Un gestionnaire dudit au moins un noeud de cache reçoit de l'organisme de centralisation monétaire, pour chaque paquet reçu pendant la session, la compensation financière du montant représentatif et la restitue à un gestionnaire dudit au moins un équipement ou noeud remplacé, ou permet à un gestionnaire dudit au moins un équipement ou noeud remplacé de recevoir directement la compensation financière.

## Description

Le domaine de l'invention est celui des réseaux de transmission de données par paquets, et notamment, mais non exclusivement, des réseaux de type Internet.

D'une façon générale, de tels réseaux permettent d'établir des sessions, chacune entre un équipement source et un équipement destination, interconnectés via un ou plusieurs noeuds du réseau. Au cours de chaque session, l'équipement destination et/ou un ou plusieurs noeuds du réseau effectuent des opérations de transmission et/ou de service. L'équipement destination et/ou le(s) noeud(s) qui effectuent les opérations précitées sont utilisés par un opérateur du réseau et/ou un fournisseur de service. Dans la présente description, par fournisseur de service on entend ici également un fournisseur de contenu.

Par opérations de transmission, on entend des opérations de transport de paquets de données sur le réseau. Par opérations de service, on entend tous types d'opérations en rapport avec le contenant ou le contenu des paquets de données transmis. Les opérations de service consistent par exemple en un cryptage/décryptage des données contenues dans les paquets, ou encore en une exécution d'un code exécutable ou interprétable d'un programme ou d'une partie de programme contenue dans les paquets.

Les opérations de transmission et/ou de service permettent par exemple la diffusion d'oeuvres audio ou vidéo sur le réseau Internet. Dans ce cas, un client (l'équipement source, par exemple) envoie à un fournisseur de service (l'équipement destination, par exemple) une requête concernant une oeuvre donnée, et en retour le fournisseur de service retourne au client un fichier de données audio ou vidéo relatives à l'oeuvre donnée.

Plus précisément, l'invention concerne le paiement (aussi appelé la "taxation") de ces opérations de transmission et/ou de service.

Dans un souci de simplification, on discute par la suite essentiellement du cas Internet. Il est clair cependant que l'invention n'est pas limitée à ce type particulier de réseau et s'applique plus généralement à tout type de réseau de transmission de données par paquets.

Comme expliqué en détail dans le document de brevet WO 9733404 (LELEU), dont le texte est inséré ici par référence, il apparaît difficile, voire impossible, de mettre en oeuvre sur le réseau Internet les techniques classiques de paiement des opérations effectuées sur les réseaux. En effet, le réseau Internet ne possède pas d'administration centralisée nécessaire à la mise en oeuvre de ces techniques classiques de paiement, qui consistent principalement en une facturation fonction soit de la durée de connexion entre deux équipements (pour une vitesse et une distance de transmission des données prédéfinies), soit de la quantité de données échangées entre deux équipements (en tenant compte de la vitesse de transmission des données).

Pour cette raison, la technique actuelle de paiement des opérations effectuées sur le réseau Internet consiste à facturer uniquement l'accès en un point physique du réseau. Comme indiqué dans le document de brevet précité, cette facturation est soit forfaitaire, soit elle prend en compte la quantité de données émises vers l'ensemble du réseau, ou bien la totalité de données reçues de la totalité du réseau.

Malheureusement, cette technique actuelle de paiement ne permet pas une facturation juste et équitable des opérations de transmission et/ou de service effectuées au sein du réseau Internet. En effet, actuellement, la facturation des opérations de transmission et/ou de service n'est pas fonction du chemin parcouru par et de la vitesse de transmission des paquets de données.

Il a donc été proposé, dans le document de brevet WO 9733404 (LELEU), une nouvelle technique, appelée "technique des jetons" dans la suite de la description. Elle est basée sur l'insertion de jetons de paiement dans les flux de paquets, et permettant à chaque paquet de données véhiculé par le réseau d'acquitter lui-même le coût d'une opération de transmission relative à son propre transport, ou le coût d'une opération de service relative à son propre contenant ou contenu.

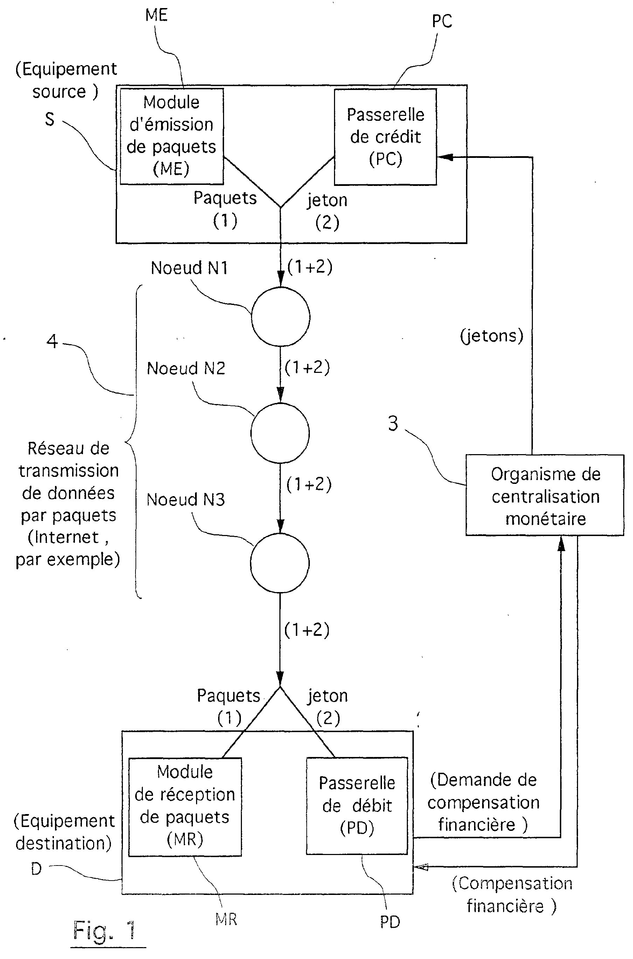

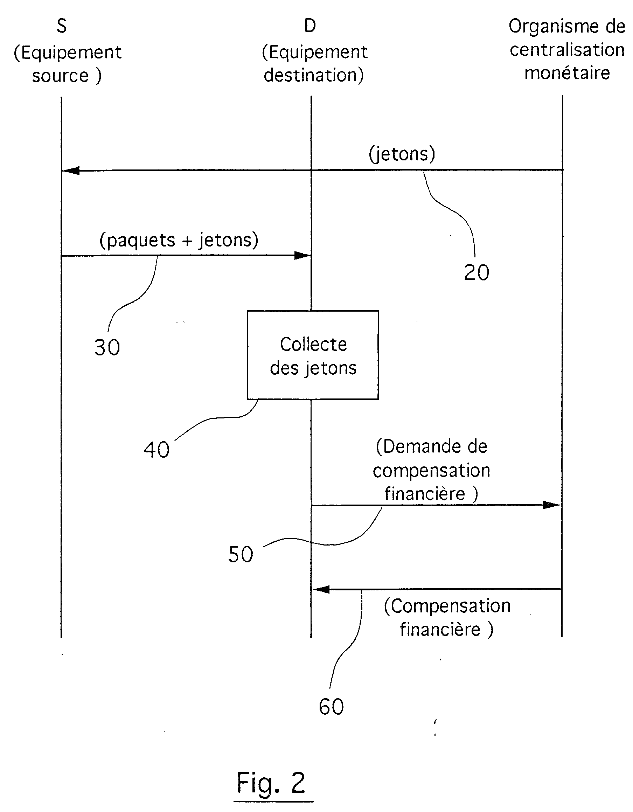

On résume maintenant brièvement, en relation avec les figures 1 et 2, le concept général de cette technique des jetons. Le réseau de transmission de données par paquet est par exemple le réseau Internet 4. L'équipement source S (et/ou au moins un noeud, dit noeud de crédit) comprend un module ME d'émission de paquets 1 et une passerelle de crédit PC. Cette dernière PC affecte à chaque paquet de données 1 émis, un jeton de paiement 2 qui possède une valeur initiale représentative d'un crédit d'unités monétaires préalablement acquises (20) auprès d'un organisme de centralisation monétaire (ou "Toll Center") 3. Chaque paquet 1 est donc émis (30) avec le jeton de paiement 2 qui lui est affecté. L'équipement destination D (et/ou au moins un noeud, dit noeud de débit, situé en aval dudit au moins un noeud de crédit) comprend un module MR de réception de paquets 1 et une passerelle de débit PD. Cette dernière reçoit le jeton affecté à chaque paquet reçu 1 et le modifie (40) de façon à diminuer sa valeur initiale d'un montant représentatif du coût des opérations à effectuer, pour le paquet reçu 1, par l'équipement destination D (et/ou ledit au moins un noeud de débit). Enfin, l'équipement destination D (et/ou chaque noeud de débit), dans lequel est compris une dite passerelle de débit PD, demande à (50) et reçoit de (60) l'organisme de centralisation monétaire 3, pour chaque paquet 1 reçu pendant la session, une compensation financière du montant représentatif.

Dans la suite de la description, la modification (30) du jeton de paiement par diminution de sa valeur initiale, est parfois aussi appelée, plus simplement, "collecte du jeton de paiement".

Dans l'exemple illustré sur les figures 1 et 2, seul l'équipement source S comprend une passerelle de crédit PC et seul l'équipement destination D comprend une passerelle de débit PD. Il est clair cependant que, d'une façon générale, un ou plusieurs noeuds de crédit peuvent également (ou alternativement) comprendre une passerelle de crédit PC, et un ou plusieurs noeuds de débit peuvent également (ou alternativement) comprendre une passerelle de dédit PD.

Dans un mode de réalisation particulier de cette technique des jetons, l'équipement source est utilisé par un foumisseur d'accès (ou ISP, pour "Internet Service Provider", ou encore IAP, pour "Internet Access Provider"), de façon que des abonnés auprès de ce fournisseur d'accès puissent accéder au réseau de transmission de données par paquets. Ainsi, la passerelle de crédit, qui est mise en place chez le fournisseur d'accès, affecte des jetons aux paquets (c'est-à-dire insère des jetons dans les flux IP) des clients qui accèdent à tel ou tel service offert par un fournisseur de service. Un service est par exemple reconnu par son adresse IP et son numéro de port (ce dernier identifiant à quel protocole de niveau supérieur la requête doit être passée). De façon classique, les abonnés sont reliés à leur fournisseur d'accès par (au moins) un autre réseau de communication, tel que le réseau téléphonique commuté ("réseau fixe", RTC) ou encore un réseau de radiocommunication ("réseau mobile", par exemple selon le standard GSM).

Cette technique des jetons présente de nombreux avantages. Elle permet notamment une facturation juste et équitable des opérations de transmission et/ou de service effectuées au sein d'un réseau de transmission de données par paquets, par exemple de type Internet. Elle peut aussi constituer un moyen de paiement électronique, associé au contenu des paquets, dans les noeuds du réseau. En effet, le jeton de paiement affecté à chaque paquet de données permet de financer tout type d'opération (transport et/ou service) effectuée par l'équipement destination ou n'importe quel noeud du réseau dans lequel le paquet va résider.

Toutefois, la technique des jetons présente l'inconvénient majeur de ne pas couvrir le cas, pourtant de plus en plus fréquent, où l'on utilise un équipement de cache situé, au sein du réseau, entre l'équipement comprenant la passerelle de crédit (équipement source ou noeud de crédit) et l'équipement comprenant la passerelle de débit (équipement destination ou noeud de débit).

On rappelle que, de façon classique, un équipement de cache (aussi appelé noeud de cache) stocke les réponses (pages Web, dans le cas d'Internet) aux requêtes les plus fréquentes vers différents sites finaux. Ainsi, lorsqu'il reçoit une requête dont il a préalablement stocké la réponse, l'équipement de cache envoie lui-même la réponse au client ayant émis cette requête. De cette façon, on limite le nombre de requêtes réellement répercutées auprès des sites finaux, et on réduit donc les temps de réponse. Typiquement, l'équipement de cache est un serveur "Proxy".

Or, la technique des jetons ne prévoit rien dans le cas où un équipement de cache effectue une ou plusieurs opérations à la place d'un autre équipement (équipement destination ou noeud de débit) situé en aval. Ceci signifie que la passerelle de débit comprise dans cet autre équipement ne reçoit jamais certains paquets de données (correspondant aux requêtes non répercutées aux sites finaux), ni a fortiori les jetons de paiement affectés à ces derniers. En d'autres termes, il est actuellement impossible d'appliquer la technique des jetons dès lors qu'un équipement de cache est utilisé.

L'invention a notamment pour objectif de pallier cet inconvénient majeur de l'état de la technique.

Plus précisément, l'un des objectifs de la présente invention est de fournir un procédé et un système de paiement constituant un perfectionnement à la technique des jetons discutée ci-dessus, de façon que cette dernière puisse être appliquée même lorsqu'un équipement de cache est utilisé.

L'invention a également pour objectif de fournir de tels procédé et système de paiement, permettant à l'équipement ou noeud remplacé (équipement destination ou noeud de débit) d'être informé sur et de contrôler la collecte des jetons qui lui sont destinés, malgré qu'il n'effectue pas lui-même cette collecte.

Un autre objectif de l'invention est de fournir de tels procédé et système de paiement, incluant un mécanisme de test de continuité de service.

Ces différents objectifs, ainsi que d'autres qui apparaîtront par la suite, sont atteints selon l'invention à l'aide d'un procédé de paiement d'opérations de transmission et/ou de service effectuées au sein d'un réseau de transmission de données par paquets, lors d'une session entre un équipement source et un équipement destination interconnectés via au moins un noeud dudit réseau, ledit équipement destination et/ou ledit au moins un noeud étant utilisé(s) par au moins un opérateur et/ou au moins un fournisseur de service. Le procédé est du type mettant en oeuvre la technique des ejtons telle que précitée.

Selon l'invention, entre ledit équipement source et ledit équipement destination, au moins un noeud est utilisé comme noeud de cache, comprenant des moyens de cache permettant d'effectuer au moins une opération de cache, à la place d'au moins un équipement ou noeud remplacé, à savoir ledit équipement destination et/ou au moins un noeud, situé en aval dudit au moins un noeud de cache. En outre, ledit au moins un noeud de cache se comporte également comme un noeud de débit, et comprend une dite passerelle de débit modifiant le jeton de paiement affecté à chaque paquet de données reçu, de façon à diminuer ladite valeur initiale du jeton de paiement, d'un montant représentatif du coût de ladite au moins une opération de cache effectuée, pour ledit paquet reçu, par ledit noeud de cache. Enfin, un gestionnaire dudit au moins un noeud de cache : reçoit dudit organisme de centralisation monétaire, pour chaque paquet reçu pendant ladite session, ladite compensation financière dudit montant représentatif et la restitue à un gestionnaire dudit au moins un équipement ou noeud remplacé, ou permet à un gestionnaire dudit au moins un équipement ou noeud remplacé de recevoir directement ladite compensation financière.

Le principe général de l'invention consiste donc à inclure dans le noeud de cache une passerelle de débit qui se substitue, pour la collecte des jetons, à la passerelle de débit de l'équipement ou noeud remplacé. Une compensation financière des jetons ainsi collectés peut être demandée à l'organisme de centralisation monétaire, au bénéfice (directement ou via le noeud de cache) de l'équipement ou noeud remplacé.

De cette façon, les jetons peuvent être collectés malgré qu'ils n'arrivent pas jusqu'à l'équipement ou noeud remplacé. En d'autres termes, laprésente invention permet d'appliquer la technique des jetons malgré qu'un équipement de cache est utilisé.

Préférentiellement, on place au moins une sonde en amont dudit au moins un noeud de cache, permettant de collecter, dans chaque paquet arrivant dans ledit au moins un noeud de cache, des informations relatives au montant représentatif du coût de ladite au moins une opération de cache à effectuer, pour ledit paquet, par ledit au moins un noeud de cache. Ledit gestionnaire dudit au moins un équipement ou noeud remplacé reçoit lesdites informations collectées par ladite au moins une sonde, de façon à disposer dudit montant représentatif des coûts des opérations de cache effectuées par ledit au moins un noeud de cache pour chaque paquet reçu pendant ladite session.

De cette façon, grâce à la sonde, le possesseur de l'équipement ou noeud remplacé peut contrôler, de façon indépendante, la collecte de jetons de paiement qu'effectue pour lui le noeud de cache. Ceci est particulièrement intéressant pour un fournisseur de service qui souhaite contrôler, indépendamment de l'opérateur du réseau, la collecte, effectuée en amont, des jetons de paiement affectés aux requêtes concernant son service mais qui ne parviennent pas jusqu'à lui (du fait qu'elles sont traitées directement par le noeud de cache).

Dans un mode de réalisation particulier de l'invention, ledit équipement source est utilisé par un fournisseur d'accès audit réseau de transmission de données par paquets, et permet de fournir ledit accès à au moins un abonné auprès dudit fournisseur d'accès.

Préférentiellement, le fournisseur d'accès assume également le rôle de gestionnaire du noeud de cache. En effet, de façon classique et notamment dans le cas d'Internet, le fournisseur d'accès assume une fonction d'opérateur pour une partie du réseau de transmission de données par paquets.

Avantageusement, chaque jeton de paiement est affecté à un paquet donné par insertion dudit jeton de paiement dans ledit paquet et/ou dans au moins une structure d'encapsulage de niveau supérieur dudit paquet.

En d'autres termes, le jeton de paiement affecté à un paquet n'est pas forcément inséré dans le paquet lui-même, mais peut aussi être inséré dans un champ d'un protocole de niveau supérieur.

De façon avantageuse, au moins une session entre ledit équipement source et ledit équipement destination est exécutée de façon connue dudit au moins un équipement ou noeud remplacé, afin de constituer une session de test dudit au moins un noeud de cache et/ou de ladite au moins une sonde. Ladite session de test est telle que, pour chaque paquet reçu pendant ladite session de test, ledit gestionnaire dudit au moins un équipement ou noeud remplacé peut vérifier que ledit gestionnaire dudit au moins un noeud de cache lui a effectivement restitué ou pemis de recevoir directement ladite compensation financière, et/ou que ladite au moins une sonde lui a effectivement transmis lesdites informations collectées.

On dispose ainsi d'un mécanisme de test de continuité de service, portant sur la collecte de jetons de paiement effectuée par le noeud de cache, et/ou sur le fonctionnement de la sonde.

De façon préférentielle, ledit réseau de transmission de données par paquets est un réseau de type Internet.

Avantageusement, lesdites opérations de service appartiennent au groupe comprenant : des opérations de fourniture de données d'informations, des opérations de fourniture de données vidéo, des opérations de fourniture de données audio, des opérations de fournitures de données de cartographie, ... Cette liste n'est pas exhaustive. D'une façon générale, la présente invention s'applique à toutes les opérations de service et/ou de transmission susceptibles d'être effectuées par un équipement de cache.

L'invention concerne également un système de paiement permettant la mise en oeuvre du procédé de paiement présenté cidessus. Le système selon l'invention comprend, entre ledit équipement source et ledit équipement destination, au moins un noeud, utilisé comme noeud de cache, comprenant des moyens de cache permettant d'effectuer au moins une opération de cache, à la place d'au moins un équipement ou noeud remplacé, à savoir ledit équipement destination et/ou au moins un noeud, situé en aval dudit au moins un noeud de cache. Afin de se comporter également comme un noeud de débit, ledit au moins un noeud de cache comprend une dite passerelle de débit, permettant de modifier le jeton de paiement affecté à chaque paquet de données reçu, de façon à diminuer ladite valeur initiale du jeton de paiement, d'un montant représentatif du coût de ladite au moins une opération de cache effectuée, pour ledit paquet reçu, par ledit noeud de cache. Un gestionnaire dudit au moins un noeud de cache possède :
- des moyens de réception de la part dudit organisme de centralisation monétaire, pour chaque paquet reçu pendant ladite session, de ladite compensation financière dudit montant représentatif, et des moyens de restitution de ladite compensation à un gestionnaire dudit au moins un équipement ou noeud remplacé ;
- ou des moyens de communication d'informations à un gestionnaire dudit au moins un équipement ou noeud remplacé, de façon que ce dernier reçoive directement ladite compensation financière.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma synoptique d'un mode de réalisation particulier des procédé et système de paiement selon l'art antérieur, mettant en oeuvre la technique des jetons ;
- la figure 2 illustre le fonctionnement du mode de réalisation particulier des procédé et système selon l'art antérieur présenté sur la figure 1, à travers les échanges effectués entre l'équipement source, l'équipement destination et l'organisme de centralisation monétaire ;
- la figure 3 présente un schéma synoptique d'un mode de réalisation particulier des procédé et système de paiement selon l'invention ;
- la figure 4 illustre le fonctionnement du mode de réalisation particulier des procédé et système selon l'invention présenté sur la figure 3, à travers les échanges effectués entre l'équipement source, la sonde, le noeud de cache, l'équipement destination et l'organisme de centralisation monétaire.

L'invention concerne donc un procédé et un système de paiement d'opérations de transmission et/ou de service effectuées au sein d'un réseau de transmission de données par paquets.

Il s'agit d'un perfectionnement à la technique des jetons, dont le concept de base est connu de l'homme du métier et est décrit de façon détaillée notamment dans le document de brevet WO 9733404 (LELEU), dont le texte est inséré ici par référence.

Les figures 1 et 2, qui illustrent un mode de mode de réalisation particulier de ce concept de base connu, ont déjà été discutées dans l'introduction de la présente description.

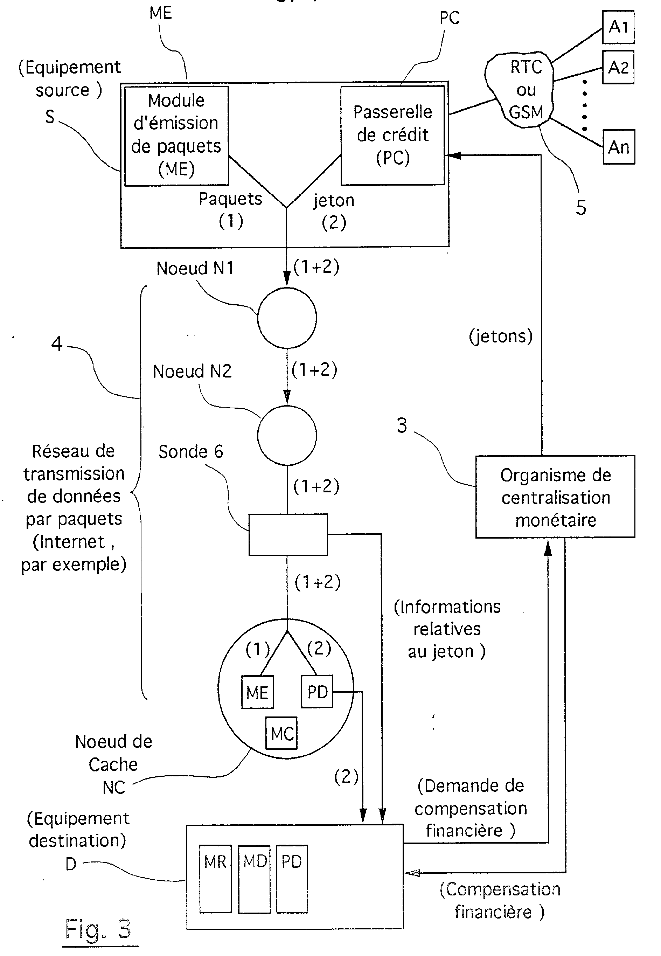

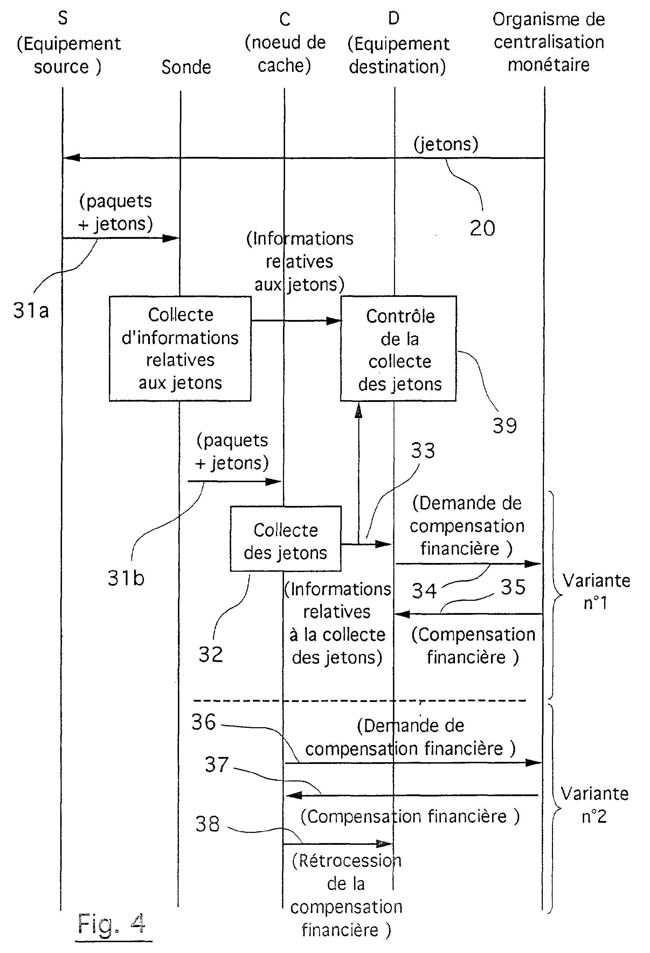

On présente maintenant, en relation avec les figures 3 et 4, un mode de réalisation particulier des procédé et système de paiement selon l'invention. Les éléments déjà présents sur les figures 1 et 2 conservent les mêmes références sur les figures 3 et 4.

Dans ce mode de réalisation particulier, le réseau de transmission de données par paquets est le réseau Internet 4. De façon classique, il comprend une pluralité de noeuds de réseau, dont notamment ceux référencés N1, N2, ..., NC sur la figure 3. Par noeud de réseau, on entend tout type d'équipement de réseau (commutateur, serveur, routeur, ...).

L'équipement source S est une passerelle d'accès ("Gateway"), gérée par un fournisseur d'accès (ISP ou IAP) au réseau Internet 4 pour une pluralité d'abonnés A₁ à Aₙ. Ces derniers sont reliés à la passerelle d'accès S du fournisseur d'accès par un autre réseau de communication 5 (RTC ou réseau GSM par exemple). La passerelle d'accès S comprend un module ME d'émission de paquets de données 1 sur le réseau Internet 4, ainsi qu'une passerelle de crédit PC permettant d'insérer un jeton de paiement dans chaque paquet 1 transmis.

Les jetons peuvent être fabriqués et reconnus à l'aide d'une fonction de hachage ("hashing"), par la passerelle de crédit et la passerelle de débit respectivement. Il y a dans ce cas un certain niveau de sécurité.

L'équipement destination D est un serveur de service, géré par un fournisseur de service, permettant par exemple la diffusion en ligne d'oeuvres multimédia. Plus généralement, le serveur de service permet d'effectuer une ou plusieurs des opérations suivantes :
- fourniture de données d'informations, par exemple sous forme de pages Web ;
- fourniture de données vidéo, par exemple au format "MPG1", "MPEG2", "MPEG4", "RealVideo", "AVI" et "ASF" de Microsoft, "Divx", etc ;
- fourniture de données audio, par exemple au format "au", "wav", "ra", "MP3", "MID", etc;
- fournitures de données de cartographie, par exemple au format "SVG", "TMF", "TPF" d'OptEWay, etc ;
- ...

Le serveur de service D comprend un module MR de réception de paquets de données 1, ainsi qu'une passerelle de débit PD permettant de collecter les jetons de paiements 2 insérés dans les paquets 1 reçus par le serveur de service D.

Il est à noter que la passerelle de débit peut extraire les jetons et former un ticket de facturation (ou CDR, pour "Call Detail Record") lorsque la cession (de service dans le cas présent) se termine. Les passerelles de crédit et de débit maintiennent ainsi une notion de session durant le temps de la connexion de service. Elles peuvent conditionner l'allocation définitive des jetons au fournisseur de contenu à la bonne fin de h connexion (de type TCP). Il s'agit en fait d'un mécanisme de type transactionnel, avec une fonction de reprise ("rollback").

Le serveur de service D comprend en outre des moyens de diffusion MD d'oeuvres multimédia en réponse aux requêtes qu'il reçoit.

On suppose que l'un des noeuds du réseau Internet est un noeud de cache NC vis à-vis du serveur de service D. Le noeud de cache est par exemple un serveur "proxy cache", géré par le fournisseur d'accès, en tant qu'opérateur d'un des systèmes autonomes interconnectés formant tous ensemble le réseau Internet (voir document de brevet WO 9733404 (LELEU)). Le noeud de cache stocke un sousensemble des oeuvres diffusées par le serveur de service D et comprend des moyens de cache MC lui permettant de répondre seul à une requête concernant une des oeuvres de ce sous ensemble (sans répercuter la requête au serveur de service D). Par ailleurs, le noeud de cache NC comprend un module MR de réception de paquets de données 1, ainsi qu'une passerelle de débit PD permettant de collecter les jetons de paiements 2 insérés dans les paquets 1 reçus par le noeud de cache.

À titre d'exemple illustratif, on suppose dans la suite de la description que l'abonné A₁ émet une requête vers le serveur de service D, via la passerelle d'accès S du fournisseur d'accès, afin de recevoir en ligne une oeuvre donnée. On suppose que le noeud de cache NC peut répondre à cette requête, sans la répercuter au serveur de service D du fournisseur de service.

On présente maintenant, à travers cet exemple et en relation avec la figure 4, le fonctionnement du système selon l'invention. On suppose qu'au préalable, la passerelle d'accès S (c'est-à-dire le fournisseur d'accès) s'est procuré (20) auprès d'un organisme de centralisation monétaire ("Toll Center") 3 une pluralité de jetons de paiement 2, possédant chacun une valeur initiale représentative d'un crédit d'unités monétaires.

Le module ME d'émission de paquets compris dans la passerelle d'accès S génère (au moins) un paquet de données contenant la requête de l'abonné A₁. La passerelle de crédit PC comprise dans la passerelle d'accès S insère dans ce paquet 1 un jeton de paiement 2. Alternativement, le jeton 2 est inséré dans une structure d'encapsulage de niveau supérieur du paquet (par exemple HTTP). La valeur initiale du jeton de paiement est dans le présent exemple égale au montant représentatif du coût de l'unique opération de service à effectuer. La passerelle d'accès S émet (31a, 31b) sur le réseau Internet 4 le paquet 1 contenant le jeton 2, à destination du serveur de service D.

Le paquet 1 n'arrive pas jusqu'à ce dernier car, dans le noeud de cache NC, il est reçu par le module MR de réception puis traité par les moyens de cache MC. Par ailleurs, la passerelle de débit PD, également comprise dans le noeud de cache NC, collecte (32) le jeton de paiement 2. C'est en contrepartie de ce dernier qu'une compensation financière va pouvoir être obtenue auprès de l'organisme de centralisation monétaire 3.

Selon une première variante, le fournisseur d'accès (en tant que gestionnaire du noeud de cache NC) fournit (33) au fournisseur de service des informations relatives à la collecte du jeton. A partir de ces informations, le fournisseur de service demande à (34) et reçoit de (35) l'organisme de centralisation monétaire 3 une compensation financière du montant représentatif du coût de l'unique opération de service effectuée.

Selon une seconde variante, le fournisseur d'accès (en tant que gestionnaire du noeud de cache NC) demande à (36) et reçoit de (37) l'organime de centralisation monétaire 3 une compensation financière du montant représentatif du coût de l'unique opération de service effectuée. Puis, le fournisseur d'accès rétrocède (38) cette compensation financière au fournisseur de service.

Optionnellement, un mécanisme de contrôle de la collecte des jetons est mis en oeuvre. Comme illustré sur les figures 3 et 4, une sonde 6 est placée, au sein du réseau Internet 4, en aval de la passerelle d'accès S et le noeud de cache NC. Chaque paquet 1 passe donc à travers cette sonde 6, ce qui permet à cette dernière de collecter des informations relatives aux jetons 2 contenus dans ces paquets. Plus précisément, la sonde 6 collecte des informations 7 relatives au montant représentatif du coût de l'opération (de cache) devant être effectuée par le noeud de cache. Les informations 7 collectées par la sonde sont transmises au fournisseur de service. Ultérieurement, par comparaison des informations fournies par la sonde avec les informations fournies par le fournisseur d'accès (en tant que gestionnaire du noeud de cache), le fournisseur de service peut contrôler (39) la collecte (32) des jetons de paiement effectuée par le fournisseur d'accès.

Également de façon optionnelle, un mécanisme de test de continuité de service est mis en oeuvre, par l'exécution, éventuellement de façon itérative, d'une session de test entre la passerelle d'accès S et le serveur de service D. Afin de lui conférer son caractère de test, cette session est particulière en ce qu'elle est exécutée de façon connue du serveur de service D. Par exemple, elle est effectuée à un instant prédéterminé et avec une valeur initiale de jeton de paiement prédéterminée. Ainsi, pour chaque paquet reçu pendant cette session de test, le fournisseur de service peut vérifier que le fournisseur d'accès (en tant que gestionnaire du noeud de cache) lui a effectivement restitué (variante 2) ou permis de recevoir directement (variante 1) la compensation financière. Il peut aussi vérifier que les informations collectées et transmises par la sonde sont correctes.

Il est à noter que l'équipement source utilisé lors de la session de test peut être soit un équipement dédié (équipement de test spécifique), soit un équipement source "classique" utilisé exceptionnellement pour des tests.

Dans le mode de réalisation particulier illustré sur les figures 3 et 4, seul l'équipement source S comprend une passerelle de crédit PC et seul l'équipement destination D comprend une passerelle de débit PD. Il est clair cependant que la présente invention s'applique également si un ou plusieurs noeuds, appelés noeuds de crédit, comprennent chacun une passerelle de crédit PC et/ou si un ou plusieurs noeuds, appelés noeuds de débit, comprennent chacun une passerelle de débit PD.

Par ailleurs, dans ce qui précède, l'opération à payer est une opération de service. Cependant, la présente invention s'applique aussi au paiement d'opérations de transport.

Il est à noter qu'un même jeton de paiement peut permettre le paiement d'opération(s) de transmission et d'opération(s) de service. Dans ce cas, la valeur initiale du jeton de paiement est égale au cumul des montants représentatifs des coûts des différentes opérations.

L'équipement remplacé par le noeud de cache NC n'est pas obligatoirement l'équipement destination D. Ce peut être un noeud de réseau situé en aval du noeud de cache.

## Revendications

1. Procédé de paiement d'opérations de transmission et/ou de service effectuées au sein d'un réseau (4) de transmission de données par paquets, lors d'une session entre un équipement source (S) et un équipement destination (D) interconnectés via au moins un noeud (N1, N2, ...) dudit réseau, ledit équipement destination et/ou ledit au moins un noeud étant utilisé(s) par au moins un opérateur et/ou au moins un fournisseur de service, ledit procédé étant tel que:
- dans ledit équipement source (S) et/ou dans au moins un noeud, dit noeud de crédit, une passerelle de crédit (PC) affecte à chaque paquet de données (1) émis par ledit équipement source, un jeton de paiement (2) qui possède une valeur initiale représentative d'un crédit d'unités monétaires préalablement acquises auprès d'un organisme de centralisation monétaire (3) ;
- dans ledit équipement destination (D) et/ou dans au moins un noeud, dit noeud de débit, situé en aval dudit au moins un noeud de crédit, une passerelle de débit (PD) modifie le jeton de paiement affecté à chaque paquet de données reçu, de façon à diminuer ladite valeur initiale du jeton de paiement, d'un montant représentatif du coût des opérations à effectuer, pour ledit paquet reçu, par ledit équipement destination et/ou ledit au moins un noeud de débit ;
- ledit équipement destination (D) et/ou chaque noeud de débit, dans lequel est compris une dite passerelle de débit (PD), reçoit dudit organisme de centralisation monétaire (3), pour chaque paquet reçu (1) pendant ladite session, une compensation financière dudit montant représentatif ;
**caractérisé en ce que**, entre ledit équipement source (S) et ledit équipement destination (D), au moins un noeud est utilisé comme noeud de cache (NC), comprenant des moyens de cache (MC) permettant d'effectuer au moins une opération de cache, à la place d'au moins un équipement ou noeud remplacé, à savoir ledit équipement destination (D) et/ou au moins un noeud, situé en aval dudit au mois un noeud de cache,
**en ce que** ledit au moins un noeud de cache se comporte également comme un noeud de débit, et comprend une dite passerelle de débit (PD) modifiant le jeton de paiement affecté à chaque paquet de données reçu, de façon à diminuer ladite valeur initiale du jeton de paiement, d'un montant représentatif du coût de ladite au moins une opération de cache effectuée, pour ledit paquet reçu, par ledit noeud de cache, et **en ce que** un gestionnaire dudit au moins un noeud de cache :
- reçoit dudit organisme de centralisation monétaire, pour chaque paquet reçu pendant ladite session, ladite compensation financière dudit montant représentatif et la restitue à un gestionnaire dudit au moins un équipement ou noeud remplacé,
- ou permet à un gestionnaire dudt au moins un équipement ou noeud remplacé de recevoir directement ladite compensation financière.

2. Procédé selon la revendication 1, **caractérisé en ce qu'**on place au moins une sonde (6) en amont dudit au moins un noeud de cache (NC), permettant de colleter, dans chaque paquet (1) arrivant dans ledit au moins un noeud de cache, des informations relatives au montant représentatif du coût de ladite au moins une opération de cache à effectuer, pour ledit paquet, par ledit au moins un noeud de cache,
et **en ce que** ledit gestionnaire dudit au moins un équipement ou noeud remplacé (D) reçoit lesdites informations collectées par ladite au moins une sonde (6), de façon à disposer dudit montant représentatif des coûts des opérations de cache effectuées par ledit au moins un noeud de cache pour chaque paquet reçu pendant ladite session.

3. Procédé selon l'une quelconque des revendications 1 et 2, **caractérisé en ce que** ledit équipement source (S) est utilisé par un fournisseur d'accès audit réseau de transmission de données par paquets, et permet de fournir ledit accès à au moins un abonné (A1, A2, ...) auprès dudit fournisseur d'accès.

4. Procédé selon l'une quelconque des revendications 1 à 3, **caractérisé en ce que** chaque jeton de paiement (2) est affecté à un paquet donné (1) par insertion dudit jeton de paiement dans ledit paquet et/ou dans au moins une structure d'encapsulage de niveau supérieur dudit paquet.

5. Procédé selon l'une quelconque des revendications 1 à 4, **caractérisé en ce qu'**au moins une session entre ledit équipement source et ledit équipement destination est exécutée de façon connue dudit au moins un équipement ou noeud remplacé, afin de constituer une session de test dudit au moins un noeud de cache et/ou de ladite au moins une sonde, et **en ce que** ladite session de test est telle que, pour chaque paquet reçu pendant ladite session de test, ledit gestionnaire dudit au moins un équipement ou noeud remplacé peut vérifier:
- que ledit gestionnaire dudit au moins un noeud de cache lui a effectivement restitué ou permis de recevoir directement ladite compensation financière ;
- et/ou que ladite au moins une sonde lui a effectivement transmis lesdites informations collectées.

6. Procédé selon l'une quelconque des revendications 1 à 5, **caractérisé en ce que** ledit réseau de transmission de données par paquets est un réseau de type Internet (4).

7. Procédé selon l'une quelconque des revendications 1 à 6, **caractérisé en ce que** lesdites opérations de service appartiennent au groupe comprenant :
- des opérations de fourniture de données d'informations ;
- des opérations de fourniture de données vidéo ;
- des opérations de fourniture de données audio ;
- des opérations de fournitures de données de cartographie.

8. Système de paiement d'opérations de transmission et/ou de service effectuées au sein d'un réseau de transmission de données par paquets, lors d'une session entre un équipement source et un équipement destination interconnectés via au moins un noeud dudit réseau, ledit équipement destination et/ou ledit au moins un noeud étant utilisé(s) par au moins un opérateur et/ou au moins un fournisseur de service, ledit système étant tel que:
- ledit équipement source et/ou au moins un noeud, dit noeud de crédit, comprend une passerelle de crédit permettant d'affecter à chaque paquet de données émis par ledit équipement source, un jeton de paiement qui possède une valeur initiale représentative d'un crédit d'unités monétaires préalablement acquises auprès d'un organisme de centralisation monétaire ;
- ledit équipement destination et/ou au moins un noeud, dit noeud de débit, situé en aval dudit au moins un noeud de crédit, comprend une passerelle de débit permettant de modifier le jeton de paiement affecté à chaque paquet de données reçu, de façon à diminuer ladite valeur initiale du jeton de paiement, d'un montant représentatif du coût des opérations à effectuer, pour ledit paquet reçu, par ledit équipement destination et/ou ledit au moins un noeud de débit ;
- ledit équipement destination et/ou chaque noeud de débit, dans lequel est compris une dite passerelle de débit, reçoit dudit organisme de centralisation monétaire, pour chaque paquet reçu pendant ladite session, une compensation financière dudit montant représentatif ;
**caractérisé en ce que**, entre ledit équipement source et ledit équipement destination, au moins un noeud, utilisé comme noeud de cache, comprend des moyens de cache permettant d'effectuer au moins une opération de cache, à la place d'au moins un équipement ou noeud remplacé, à savoir ledit équipement destination et/ou au mois un noeud, situé en aval dudit au moins un noeud de cache,
**en ce que**, afin de se comporter également comme un noeud de débit, ledit au moins un noeud de cache comprend une dite passerelle de débit, permettant de modifier le jeton de paiement affecté à chaque paquet de données reçu, de façon à diminuer ladite valeur initiale du jeton de paiement, d'un montant représentatif du coût de ladite au moins une opération de cache effectuée, pour ledit paquet reçu, par ledit noeud de cache,
et **en ce qu'**un gestionnaire dudit au moins un noeud de cache possède :
- des moyens de réception de la part dudit organisme de centralisation monétaire, pour chaque paquet reçu pendant ladite session, de ladite compensation financière dudit montant représentatif, et des moyens de restitution de ladite compensation à un gestionnaire dudit au moins un équipement ou noeud remplacé ;
- ou des moyens de communication d'informations à un gestionnaire dudit au moins un équipement ou noeud remplacé, de façon que ce dernier reçoive directement ladite compensation financière.
